# EUROPEAN PATENT APPLICATION

(11) **EP 4 574 887 A1**
(43) Date of publication of application: **25.06.2025**
(21) Application number: 24202641.7
(22) Date of filing: 25.09.2024
(51) Int. Cl.: C08H 8/00, C05G 3/80, C08L 97/02, C09K 17/52, C08F 22/38, C08F 138/04, C08F 238/04, C08L 3/02

(54) **CELLULOSIC COMPOSITION**

(30) Priority: 20.12.2023 SE 2330585
(71) Applicant: Nobrack AB, 132 37 Saltsjö-Boo (SE)
(72) Inventor: BENNARSTEN, Johan, 132 37 Saltsjö-Boo (SE); SJÖGREN, Lars-Erik, 182 38 Danderyd (SE)
(74) Representative: Kransell & Wennborg KB

(57) **Abstract**

There is provided a method for producing a cellulosic composition for use as a soil supplement in agriculture, as a filter media or insulation comprising the steps:
a) providing a cellulosic material with a dry content of ≥ 10 wt% by dry weight;
b) adding a cationic polyelectrolyte in a content of 0.01-3 wt% by dry weight of cellulosic material to the cellulosic material having a dry content of ≥ 10 wt% by dry weight;
c) mixing the cellulosic material and the cationic polyelectrolyte; and
d) drying the cellulosic material and the cationic polyelectrolyte.

## Description

### TECHNICAL FIELD

The present disclosure relates to the field of cellulosic compositions, and in particular to a cellulosic composition for use as a soil supplement in agriculture, as a filter media or insulation.

### BACKGROUND

By human activity with the use of fossil oil and gas as an energy source the CO2 emissions in the atmosphere increases rapidly with global warming. Residuals from crops and cereal production emits billion of tons of CO2 into the atmosphere when decomposing. Harvest residuals from food production of the big four (corn, wheat, soya bean, rice) emit more than 5 billion CO2 eq. Within a month and a year more than 40% and 80% respectively of the carbon in a wheat straw has been decomposed into CO2.

Agriculture is the practice of cultivating soil, growing crops, and raising animals for food, fiber, medicinal plants, and other products used to sustain and enhance human life. It is a critical component of human civilization, providing the primary source of food and raw materials.

Crop production includes growing a wide variety of plants such as grains, vegetables, fruits, and flowers. This involves irrigating and fertilizing for which there are problems to overcome including keeping the crops from drying out.

Filter media are materials used in filtration systems to remove particles, impurities, or contaminants from air, water, or other fluids.

Insulation refers to materials used to reduce the transfer of heat, sound, or electricity between environments.

There is an increased environmental concern, and products that traditionally have been based on synthetic materials are now desirable to replace with natural options. Filter medias and insulation are two areas where it would be desirable to use bio-based options instead. There are, however, problems to overcome to implement such transition.

### SUMMARY

One objective of the present disclosure is to provide a soil supplement which improves nutrient content, and overall health of crops, in particular by improving soil moisture retention and provision of nutrients. In addition, the soil supplement improves the humus level and thereby the yield of crops or plants, and carbon sequestration. Carbon sequestration reduces the amount of CO2 in the air.

There is also an objective of the present disclosure to provide a bio-based filter media as well as a bio-based insulation material.

Accordingly, as a first aspect of the present disclosure there is provided a method for producing a cellulosic composition for use as a soil supplement, as a filter media or insulation comprising the steps:
a) providing a cellulosic material with a dry content of ≥ 10 wt% by dry weight;
b) adding a cationic polyelectrolyte in a content of 0.01-3 wt% by dry weight of cellulosic material to the cellulosic material having a dry content of ≥ 10 wt% by dry weight;
c) mixing the cellulosic material and the cationic polyelectrolyte; and
d) drying the cellulosic material and the cationic polyelectrolyte.

As a second aspect of the present disclosure, there is provided a cellulosic composition with a dry content of ≥ 10 wt% by dry weight for use as a soil supplement as a filter media or insulation comprising a cellulosic material and 0.01-3 wt% cationic polyelectrolyte by dry weight of the cellulosic material.

As a third aspect of the present disclosure, there is provided use of the composition according to the second aspect of the present disclosure as a soil supplement, as insulation, as filter media, as wipes or as absorbent mats.

As a fourth aspect of the present disclosure there is provided a mulch comprising the composition according to the second aspect of the present disclosure.

### DETAILED DESCRIPTION

According to a first aspect of the present disclosure there is provided a method for producing a cellulosic composition for use as a soil supplement in agriculture, as a filter media or insulation comprising the steps:
a) providing a cellulosic material with a dry content of ≥ 10 wt% by dry weight;
b) adding a cationic polyelectrolyte in a content of 0.01-3 wt% by dry weight of cellulosic material to the cellulosic material having a dry content of ≥ 10 wt% by dry weight;
c) mixing the cellulosic material and the cationic polyelectrolyte; and
d) drying the cellulosic material and the cationic polyelectrolyte.

Soil supplements are materials added to soil to improve for example its humus level, physical properties, nutrient content, and overall health. The soil is used in agriculture, horticulture and/or composts. Accordingly, the cellulosic composition can be added directly to soil in agriculture, the cellulosic composition can also be added directly to soil in horticulture, the cellulosic composition can also be added to a compost to improve composting. Soil produced in the compost can later be added to agriculture and/or horticulture. To be suitable for use as a soil supplement it is important that the cellulosic composition can be added to and distributed in the soil.

The inventors have realized that the cellulosic composition when put in soil contributes with water retention, which is beneficial by decreasing dehydration of soil, also known as soil desiccation. Without being bound to any theory it is believed that when the cationic polyelectrolyte is added to the cellulosic material, the cationic polyelectrolyte binds to the cellulosic material providing a protection of the cellulosic material keeping the moisture from evaporating out into the atmosphere by for example wind and sunshine. Thereby, the cellulosic material can provide moisture to the soil and crops which increases the mulch content. In many parts of the world, in particular where there is a dry climate, e.g. in southern parts of Europe, India, California or parts of South America or Africa, there is a problem with that crops are not growing satisfactory due to too low mulch content. Therefore, the crops are not growing until needed to provide food. In addition, as yet another consequence the crops residues are incinerated. One traditional way of increasing mulch content is by addition of peat. However, when harvesting peat, high amounts of CO₂ are released into the atmosphere, which is negative as it increases the greenhouse effect.

Moreover, the composition also provides nutrients, in particular in case the cationic polyelectrolyte is a nitrogen-containing polyelectrolyte. Further, the inventors have also realized that the cellulosic material in the composition does not degrade as fast and/or to the same extent as untreated cellulosic material and thereby sequester carbon. With reduced decomposition of cellulosic material, the nutrients in the soil can to a greater extent be for the plant and not for the microbes in the soil decomposing cellulosic material. Accordingly, the composition provides a combination of water retention, nutrient provision and carbon sequestration.

As is understood by the skilled person, the cellulosic material has a dry content ≥ 10 wt% when adding the cationic polyelectrolyte. The inventors have realized that if the dry content is low, e.g. addition of the cationic polyelectrolyte to the cellulosic material in a suspension, the adsorption of the cationic polyelectrolyte is of significantly less quantity due to the dilution effect of the cellulosic material being provided with a higher water content. Thereby, even though if the same amount in dry weight of cationic polyelectrolyte would be added to the same amount in dry weight of cellulosic material the adsorbed cationic polyelectrolyte is significantly less since such suspension is typically dewatered and dried directly after addition not providing enough time for a high degree of adsorption. Advantageously, the cellulosic material provided in step a) has an even higher dry content of ≥ 15 wt% by dry weight, such as ≥ 20 wt% by dry weight. Moreover, with a much lower dry content, such as in case of a pulp suspension having a dry content of about 0.1 wt% by dry weight, there is also a need for excessive dewatering which is a disadvantage from a cost and efficiency perspective. With a higher dry content it allows for impregnation and use of the cellulosic material without any active dewatering step between said impregnation and use.

The cellulosic material is typically wood material, such as wood chips, wood shavings, sawdust, cutter chips and/or bark; plant fibers, such as straw, hemp, jute, flax, bagasse, bamboo and/or cotton; pulp fibers, such as wood pulp and/or regenerated cellulose fibers; fiber sludge, biosludge, peat, organic waste, composted organic material, agricultural residues or mixtures thereof. Typically, the cellulosic material is divided into pieces to facilitate mixing and spreading. The inventors have further realized that cellulosic material having a composition close to the composition of the corresponding raw material provides an improved effect in terms of carbon sequestration and resistance to degradation. Without being bound to any theory, it is believed that the less chemically refined the raw material is, the more efficient is the adsorption of cationic polyelectrolyte. Accordingly, mechanical pulp fibers are preferred over chemical pulp fibers as the mechanical pulp fibers have a chemical composition similar to that of native wood. Likewise, cellulosic material being only slightly processed, such as wood material, plant fibers, fiber sludge, biosludge, peat, organic waste, composted organic material, agricultural residues or mixtures thereof are preferred over pulp fibers being less desirable to use as they have been previously treated in a pulping process. Moreover, it is more cost-efficient to use unprocessed cellulosic material as no pulping has been conducted and in case of pulp fibers provided in a suspension, the dry content is typically low, e.g. about 0.1 wt% by dry weight, and dewatering issues therefore also arises. Accordingly, the cellulosic material is preferably mechanical wood pulp, wood material, plant fibers, fiber sludge, biosludge, peat, organic waste, composted organic material, agricultural residues or mixtures thereof, even more preferably, wood material, plant fibers, fiber sludge, biosludge, peat, organic waste, composted organic material, agricultural residues or mixtures thereof.

Chemical pulp fibers are made by breaking down the lignin in wood using chemicals, which helps in separating the fibers. Examples of chemical pulp fibers are kraft pulp, sulfite pulp, soda pulp and semi-chemical pulp. Mechanical pulps are produced by grinding or refining wood chips into fibers without significant chemical processing, retaining more lignin. Examples of mechanical pulp fibers are groundwood pulp, refiner mechanical pulp (RMP), thermomechanical pulp (TMP) and chemi-thermomechanical pulp (CTMP).

As understood by the skilled person, the term cellulosic material refers to a material comprising cellulose not to be confused with the term cellulose, which refers to only cellulose. A cellulosic material typically comprises further components, e.g. hemicellulose, lignin, inorganic compounds etc., and the whole material is still a cellulosic material.

In case the dry content of the cellulosic material is ≤ 10 wt% by dry weight, the effect of combined water retention of plants, provision of nutrients and carbon sequestration is not obtained. Such case is for example if the polyelectrolyte is added to suspension of cellulosic material, e.g. a pulp suspension.

Preferably, the cellulosic material is non-delignified cellulosic material. Accordingly, the lignin content of the cellulosic material is typically at least 3% by dry weight, such as at least 5% by dry weight according to ASTM E1758-01. It has been realized that the combined effect of water retention, nutrient provision and carbon sequestration is improved if the cellulosic material is non-delignified.

Typically, the cationic polyelectrolyte in step b) is added with an aqueous solvent. Aqueous solvents are solvents in which water is the primary component. In such case, the concentration of the cationic polyelectrolyte in the aqueous solvent is typically 0.05-20 wt% by dry weight, such as 0.1-15 wt% by dry weight, such as 0.5-15 wt%. Typically, the cationic polyelectrolyte has an electrical conductivity in the aqueous solvent according to ISO 7888:1985 of at least 100 µS/cm, such as at least 300 µS/cm.

Typically, the cationic polyelectrolyte is a nitrogen-containing polyelectrolyte, preferably polyethylenimine (PEI), polyvinylamine (PVAm), cationic polyacrylamide (CPAM), cationic starch or mixtures thereof. A nitrogen-containing polyelectrolyte provides nutrition to crops growing in the soil. All crops require nitrogen for growth. However, the crops in the soil compete with microorganisms for nitrogen. Thereby, addition of a nitrogen-containing polyelectrolyte is beneficial for access to nitrogen of crops growing in the soil. In addition, the need for fertilizers is reduced.

A preferred way of adding the cationic polyelectrolyte is by spraying. Spraying is a method of applying liquids in the form of fine droplets. If the droplets are very small, such addition can also be referred to as misting. Within the present disclosure misting is a type of spraying. By spraying, potential dewatering problems are reduced or even omitted as the combination of the cellulosic material having a dry content of ≥ 10 wt% by dry weight and spraying of the cationic polyelectrolyte, maintains the dry content at a high level, close to or even above 10 wt% by dry weight. A more efficient process is thereby provided. Moreover, spraying distributes the cationic polyelectrolyte in an efficient way in the cellulosic material.

Typically, the cationic polyelectrolyte is added to the cellulosic material in a content of 0.05-3 wt% by dry weight of cellulosic material, such as 0.1-3 wt% by dry weight of cellulosic material.

In one embodiment the cellulosic material is agricultural residues. Agricultural residues are the by-products left over from the cultivation and processing of crops. These residues can be divided into two main categories: field residues and processing residues. Field residues are the parts of the crop that remain in the field after harvesting, for example stalks and stems being non-harvested portions of plants like corn stalks, wheat straw, and rice straw. Processing residues are by-products generated during the processing of agricultural products, for example husks and shells being outer coverings removed from grains, nuts, and seeds. In such embodiment, it is particularly preferred that agricultural residues are collected followed by addition of the polyelectrolyte, mixing and drying in the field where the crops are being cultivated. For example, by using the same machinery to conduct all four steps. In such case, there is typically an intermediate step between mixing and drying which is distribution of the composition in soil. The drying can subsequently be conducted by drying in the sun. Such distribution can be conducted by e.g. ploughing back the composition into the soil or spreading it out on the soil. The agricultural residues may be divided into smaller pieces. Typically, at least the field residues are divided into smaller pieces to allow for improved mixing with the cationic polyelectrolyte and distribution in soil. Moreover, harvest residuals from agriculture and food production are beneficial to use from a climate perspective, as it has been estimated that 10% reduction of CO2 eq from decomposition of harvest residuals from the big four cereals will reduce the CO2 emission by 0.5 billion ton per year.

Typically, the composition comprises at least 95% cellulosic material by dry weight of the composition, such as at least 97% by dry weight of the composition.

Typically, the cellulosic composition and polyelectrolyte constitutes at least 95% by dry weight, such as at least 97% by dry weight, such as at least 98% by dry weight, such as least 99% by dry weight of the composition.

As a second aspect of the present disclosure, there is provided a cellulosic composition with a dry content of ≥ 10 wt% by dry weight for use as a soil supplement in agriculture as a filter media or insulation comprising a cellulosic material and 0.01-3 wt% cationic polyelectrolyte by dry weight of the cellulosic material.

Preferably, the cellulosic composition is provided divided into finely divided pieces, e.g. particles, or in bales. Bales are preferred in case production of the cellulosic composition is conducted at a first location and the usage is at a second location separate of the first location requiring transport of the cellulosic composition. A bale is a compressed bundle of loose material in contrast to webs, sheets or moulded three-dimensional structures that are either continuous or structured forms used differently in production or manufacturing. In case production and usage is at the same location, it is advantageous if the cellulosic composition is provided into finely divided pieces, e.g. particles, as distribution of the cellulosic composition is facilitated.

Typically, the cellulosic composition has a density of ≤ 600 kg/m³, such as ≤ 550 kg/m³. If the cellulosic composition is provided in particle form, the density can for example be measured according to ASTM E873-82(2013). On the other hand, if the cellulosic composition is provided in bales the density can for example be measured according to ISO 8115-1:1986.

The examples and embodiments discussed above in connection to the first aspect apply to the second aspect *mutatis mutandis.*

As a third aspect of the present disclosure, there is provided use of the composition according to the second aspect of the present disclosure as a soil supplement, as insulation, as filter media, as wipes or as absorbent mats.

Filter media are materials used in filtration systems to remove particles, impurities, or contaminants from air, water, or other fluids. Just as filter media, wipes and absorbent mats are used to remove particles, impurities, or contaminants. Absorbent mats are not limited to mats of a certain size, but includes e.g. pads, towels, pillows, socks, sheets, booms, rugs and runners. Absorbent socks are long, flexible tubes designed to contain and absorb spills around machinery or in confined areas. Absorbent booms are larger, more robust tubes used for containing large spills, particularly on water bodies. Absorbent pillows are square or rectangular pillows that absorb large quantities of liquid in specific areas. Absorbent rolls are long sheets of absorbent material in roll form, allowing users to cut them to custom lengths as needed. Absorbent rugs and runners are designed for floor coverage, offering absorption over a large surface area while also functioning as a protective mat.

In a preferred embodiment of use of the composition as wipes or as absorbent mats, the cellulosic composition comprises a mixture of cellulosic fibers being pulp fibers and non-pulp fibers. In such case, it is preferred that the composition comprises at least 10% by dry weight of pulp fibers with respect to the fiber content.

Insulation refers to materials used to reduce the transfer of heat, sound, or electricity between environments.

The examples and embodiments discussed above in connection to the first and second aspects apply to the third aspect *mutatis mutandis.*

As a fourth aspect of the present disclosure there is provided a mulch comprising the composition according to the second aspect of the present disclosure.

A mulch is a layer of material applied to the surface of soil.

The examples and embodiments discussed above in connection to the first, second and third aspects apply to the fourth aspect *mutatis mutandis.*

### EXAMPLES

### Evaluation of water uptake

Water uptake is an indirect measurement on how much of the polyelectrolyte added to respective mixture that is absorbed by the cellulosic material. In case a low amount of polyelectrolyte is adsorbed, the water uptake is higher and in case a higher amount of the added polyelectrolyte is adsorbed, the water uptake is lower. Without being bound to any theory it is believed that the cationic polyelectrolyte adsorbs to the anionic charges of the cellulosic material, whereby the anionic charges are neutralized making the cellulosic material less polar leading to a lower absorption of water.

### Preparation of test specimens

Cellulosic raw materials being fiber sludge form a sulphate mill having a lignin content of about 25%, peat having a lignin content of about 15%, agricultural residues having a lignin content of about 10%, and pulp fibers having a lignin content of about 25% were tested.

The fiber sludge had a dry content of about 30-40 % by dry weight. Fiber sludge was sprayed with an aqueous solution of cationic polyelectrolyte (Xelorex, Solenis) with a concentration of 10% to provide an addition of 1.2% by dry weight of cationic polyelectrolyte with respect to the dry weight of the raw material followed by mixing and drying.

Moreover, the agricultural residues as well as peat having a dry content of above 90% by dry weight were separately sprayed with an aqueous solution of polyvinylamine (Xelorex, Solenis) with a concentration of 10% to provide an addition of 1.2% by dry weight of polyvinylamine with respect to dry weight if cellulosic material followed by mixing and drying.

Separately, pulp fibers were provided in an aqueous suspension at a concentration of about 1 % by dry weight and the aqueous solution of polyvinylamine (Xelorex, Solenis) having a concentration of 10% was sprayed into the suspension to provide an addition of 1.2% by dry weight. The suspension was thereafter mixed, dewatered and dried.

### Evaluation of water uptake

Water uptake was quantified by measuring the weight of the fiber sludge after 20, 60 and 120 minutes. The results are presented in Table 1 below.

**Table 1. Water uptake.**

| **Fiber sludge sulphate paper mill** | **Water uptake g/g dry weight** | | |
|---|---|---|---|
| | 20 min | 60 min | 120 min |
| Unmodified | 1.6 ± 0.3 | 3.4 ± 0.5 | 4.2 ± 0.6 |
| With polyelectrolyte | 0.5 ± 0.0 | 0.8 ± 0.1 | 1.1 ± 0.2 |

As seen in Table 1 is there a significant difference in the water uptake of the unmodified fiber sludge compared with the fiber sludge that had polyelectrolyte added.

Likewise, both the peat and the agricultural residues displayed a significantly decreased water uptake in a similar test.

The pulp fibers impregnated with polyelectrolyte while the pulp fibers were in suspension, on the other hand, displayed a similar water uptake to unmodified pulp fibers.

### Evaluation of degradation by mass

### Preparation of test specimens

Cellulosic raw materials being softwood Chemi Thermo Mechanical Pulp (CTMP) having a lignin content of about 25%, pine sapwood chips having a lignin content of about 25%, and birch sapwood chips having a lignin content of about 20%, were tested.

The CTMP had a dry content of about 25-40% and was sprayed with an aqueous solution of cationic polyelectrolyte (Xelorex, Solenis) with a concentration of 10% to provide an addition of 1.2% by dry weight of cationic polyelectrolyte with respect to the dry weight of the raw material followed by mixing and drying.

The wood chips were left untreated as control samples. All samples were conditioned at 20°C, 85 % RH and then planted in the soil to a depth of approximately 10 cm. Testing was conducted according to the European testing standard SS-ENV 807:2009 and evaluated after 32 weeks of degradation. The results are presented in Table 2 below.

**Table 2. Degradation test.**

| **Material** | **Mass loss (%) after degradation** |
|---|---|
| Pine sapwood control | 43.2 ± 3.5 |
| Birch sapwood control | 66.0 ± 14.2 |
| CTMP fibers with 1.2 % cationic polyelectrolyte | 1.8 ± 0.2 |

The impregnated CTMP fibers outperformed the pine as well as birch control samples.

### Evaluation of nitrogen-immobilization

### Preparation of test specimens

Nitrogen-immobilization (N-immobilization) refers to the process of converting inorganic nitrogen (such as ammonium or nitrate) into organic forms, which are then incorporated into microbial biomass or organic matter. This process reduces the availability of inorganic nitrogen in the soil or aquatic environments, thus "immobilizing" it and preventing it from being readily accessible to plants or other organisms.

N-immobilization typically occurs when there is an abundance of carbon-rich organic material in the environment. Microorganisms use this carbon source for growth, and in doing so, they take up inorganic nitrogen from the surroundings to balance their nutrient needs, converting it into organic nitrogen in their biomass.

A nitrogen immobilization test was conducted on hydrangea soil evaluating the extent to which nitrogen is absorbed or retained by soil microorganisms, making it temporarily unavailable for plant uptake. In this test the cellulosic material is added to the soil and then left to incubate allowing microorganisms to act on nitrogen. After incubation, the remaining nitrogen levels in the soil are measured. This shows how much nitrogen has been immobilized (taken up by microbes) versus how much remains available for plant use. The difference between the initial nitrogen amount and the remaining nitrogen indicates the level of immobilization, which informs how effectively the hydrangea can access nitrogen from the soil.

Thereby, an N-immobilization test reflects how much extra nitrogen that would be needed to be added to the hydrangeas during growth. A lower number is therefore advantageous as less extra nitrogen is needed.

### Preparation of test specimens

Cellulosic raw materials being fiber sludge form a sulphate mill having a lignin content of about 25% and CTMP fibers having a lignin content of about 25% were tested.

The fiber sludge had a dry content of about 30-40 % by dry weight and the CTMP had a dry content of about 25-40% by dry weight. The fiber sludge and the CTMP were sprayed separately with an aqueous solution of cationic polyelectrolyte (Xelorex, Solenis) with a concentration of 10% to provide an addition of 1.6% by dry weight of cationic polyelectrolyte with respect to the dry weight of the raw material followed by mixing and drying. CTMP without any cationic polyelectrolyte was used as a reference. The fiber sludge was after drying pressed at 250-300 °C into pellets. All cellulosic materials were separately immobilized in the hydrangea soil.

The results of the N-immobilization is presented in Table 3 below.

**Table 3. Evaluation of N-immobilization.**

| | Weeks | | | |
|---|---|---|---|---|
| | 1 | 3 | 6 | 9 |
| CTMP 0% (mmol N per liter soil) | >30 | >30 | >30 | >30 |
| Fiber sludge 1.6% (mmol N per liter soil) | 4 | 13 | 21 | 21 |
| CTMP 1.6% (mmol N per liter soil) | 9 | 11 | 14 | 14 |

The equipment can measure up to 30 mmol N per liter soil, at a higher level it is not possible to differentiate the results. Already after 1 week, the unmodified CTMP gave such result. It is preferred that the mmol of N per liter soil measured is about 20 or lower.

### Evaluation of water-holding capacity

Water-holding capacity reflects how well the internal water of the cellulosic material is kept within the cellulosic material so that it can continue to provide water to the soil as it has not been dried out.

### Preparation of test specimens

Saw dust from fir denoted "mulcher pale" having a lignin content of about 25% and a dry content of 92% by dry weight, two types of fiber rejects denoted "mulcher grey" and "mulcher brown" with a dry content of 92% by dry weight were sprayed with an aqueous solution of cationic polyelectrolyte (Xelorex, Solenis) with a concentration of 10% to provide an addition of 1.2% by dry weight of cationic polyelectrolyte with respect to the saw dust, and the two types of fiber rejects.

In addition, bark, polystyrene beads and vermiculite granules were used for comparison being commercially available mulcher products.

After addition of the cationic polyelectrolyte the materials were dried.

### Test set-up

Pots were filled with 65% water and 35% soil at a weight of about 33 g. Per rack there was in total 6 pots and each rack contained 200 g water and soil. To each pot, 7.5 ml of dry test specimen was added. As a control, to one pot no test specimen was added.

A fan was arranged 50 cm away from the racks and with constant air flow directing air onto the pots in the rack. Every 12^{th} hour the pots were weighed to calculate the ability of holding water. The ability of holding water was evaluated as mass loss, the lower the mass loss, the better water-holding capacity. The results are presented in Table 4 below.

**Table 4. Evaluation of water-holding capacity.**

| Time (h) | Ref. | Mulcher pale | Mulcher brown | Mulcher grey | Bark | Polystyrene | Vermiculite |
|---|---|---|---|---|---|---|---|
| 0 | 0 | 0 | 0 | 0 | 0 | 0 | 0 |
| 4 | 11 | 5 | 5 | 6 | 9 | 5 | 9 |
| 12 | 36 | 15 | 17 | 20 | 24 | 16 | 26 |
| 24 | 70 | 31 | 39 | 36 | 39 | 37 | 39 |
| Water holding capacity compared with ref. after 24 h | | 56% | 44% | 49% | 44% | 47% | 44% |
| 36 | 85 | 43 | 52 | 54 | 56 | 53 | 58 |
| 48 | 100 | 57 | 68 | 69 | 63 | 67 | 69 |
| Water holding capacity compared with ref. after 48 h | | 43% | 32% | 31% | 37% | 33% | 31% |
| 60 | 109 | 68 | 79 | 85 | 82 | 80 | 82 |
| 72 | 116 | 78 | 92 | 95 | 89 | 91 | 90 |
| Water holding capacity compared with ref. after 72 h | | 33% | 21% | 18% | 23% | 22% | 22% |
| 84 | 120 | 88 | 101 | 104 | 100 | 101 | 99 |
| 96 | 122 | 98 | 110 | 110 | 106 | 108 | 104 |
| Water holding capacity compared with ref. after 96h | | 20% | 10% | 10% | 13% | 11% | 15% |
| 108 | 122 | 107 | 115 | 114 | 116 | 113 | 110 |
| 118 | 122 | 112 | 118 | 116 | 119 | 116 | 112 |

The reference being void of the cationic polyelectrolyte displayed a higher water loss, i.e. a lower capacity of binding water. In particular during the first 48 hours there is a significantly reduced water loss of the treated samples compared with the reference and commercial mulchers (bark, polystyrene and vermiculite). This improvement is visualized in Table 2 above by the inserted row describing the water holding capacity compared with the reference after 24, 48, 72 and 96 h. All inventive examples displayed a significant improvement compared with the reference, also over time. Mulcher pale, being based on saw dust, an un-refined, i.e. not pulped, source of cellulosic material, displayed particularly good results.

Notably, the biobased mulchers have at least a comparable water-holding capacity compared with conventionally used polystyrene, bark and vermiculite, even for longer times, up to 96h.

### Evaluation of Aerobic and Anaerobic degradation

### Preparation of test specimens

Two test specimens were used: wood fibers and wheat straw. The wood sample was wood fibers from wood residues - a mix of chips, bark and shavings from fir and pine having a lignin content of about 20-30% and the wheat straw had a lignin content of about 15%. The wood fibers and wheat straws were individually sprayed with an aqueous solution of cationic polyelectrolyte (Xelorex Solenis) with a concentration of 10% to provide an addition of 1.2% by dry weight of cationic polyelectrolyte with respect to the dry weight of the raw material followed by mixing and drying. As reference, wood fibers and wheat straw without any cationic polyelectrolyte addition was used. All fiber samples were sterilized in 120 °C for 60 minutes. In case of the inventive example, the sterilization was conducted prior to addition of the polyelectrolyte.

### Anaerobic degradation

The degradation of the samples was conducted in batch digestion. The batchwise degradation was carried out in triplicate in 0.5 L bottles containing inoculum, sample, and water. The test bottles were placed on shaking tables in a constant temperature room at 37°C. The gas pressure and methane content were measured regiooularly. Gas pressure was used to measure gas production (normal gas volume, 1 atm109 and 0°C). Gas samples were taken, and methane content was analyzed by gas chromn6atography (FID detector). The experiment included 15 samplings over an incuba120tion period of approximately 45 days.

One reference stage with only the inoculum, to eliminate its contribution to gas formation, and a positive control to evaluate the activity of the inoculum, was included.

### Aerobic degradation

When microorganisms break down organic compounds in the compost, carbon dioxide is released into the air as a residual product. By measuring the amount of carbon dioxide produced from a given amount of material, the microbial activity can be analyzed.

The samples were weighed into plastic jars and placed in airtight containers. Jars containing a NaOH solution were also placed in the same container. The jars were incubated at room temperature (~22°C) for about 45 days. Carbon dioxide formed dissolves in the NaOH and carbonates are formed. The amount of carbonates were analyzed and the result can then be converted to mg evolved CO2/g volatile solids (VS) over the specified time.

In the following Tables 3-6, the results from the anaerobic (Tables 1-2) and aerobic (Tables 3-4) degradation tests are presented. In each table there is a column where the improvement is presented in percentage. This improvement represents how much less of each of the compounds O2, CO2, and biogas was produced of the modified (inventive) examples. It is beneficial to release less carbon in terms of carbon sequestration. Due to the structure of the straw the released oxygen gas was used as an indirect test of degradation and thereby release of sequestered carbon. Accordingly, it is advantageous to release less oxygen gas. For the straw, the amount of NmL O2/g VS sample was analyzed. NmL O2 refers to the volume of oxygen, expressed in millilitres, under normal conditions (i.e., standard temperature and pressure), and g VS refers to the amount of volatile solids in grams. Volatile solids are the portion of the sample that can be vaporized or burned off when heated to high temperatures, used to represent organic material.

In Table 5 below is the amount of carbon produced in the form of biogas being carbon dioxide as well as methane gas, during the anaerobic decomposition of straw presented.

**Table 5. Evaluation of anerobic decomposition of straw.**

| ANAEROBIC DECOMPOSITION STRAW | | | |
|---|---|---|---|
| | Average C as mg biogas (CO2 + CH4)/g VS sample | | |
| Incubation time (d) | Unmodified straw (comp. ex.) | Modified straw (inv. ex.) | Improvement |
| 12 | 125.4 ± 4.7 | 102.7 ± 5.2 | 18% |
| 20 | 188.7 ± 8.3 | 158.3 ± 5.8 | 16% |
| 34 | 250.5 ± 11.1 | 219.6 ± 8.3 | 12% |
| 46 | 283.8 ± 10.3 | 252.0 ± 6.2 | 11% |
| 60 | 309.4 ± 15.7 | 284.3 ± 2.9 | 8% |

In Table 6 below is the amount of carbon produced in the form of biogas being carbon dioxide as well as methane gas, during the anaerobic decomposition of wood fibers presented.

**Table 6. Evaluation of anerobic decomposition of wood fibers.**

| ANAEROBIC DECOMPOSITION WOOD FIBERS | | | |
|---|---|---|---|
| | Average C as C mg biogas (CO2 + CH4)/g VS sample | | |
| Incubation time (d) | Unmodified wood (comp. ex.) | Modified wood (inv. ex.) | Improvement |
| 12 | 4.0 ± 1.0 | 2.4 ± 0.8 | 41% |
| 20 | 9.4 ± 0.9 | 4.6 ± 1.9 | 52% |
| 34 | 18.8 ± 1.4 | 6.2 ± 1.1 | 67% |
| 46 | 28.4 ± 1.7 | 12.9 ± 1.5 | 55% |
| 60 | 38.0 ± 3.2 | 15.7 ± 2.6 | 59% |

In Table 7 below is the amount of oxygen gas produced during the aerobic decomposition of straw presented.

**Table 7. Evaluation of aerobic decomposition of straw.**

| AEROBIC DECOMPOSITION STRAW | | | |
|---|---|---|---|
| | Average NmL O2/g VS sample | | |
| Incubation time (d) | Unmodified straw (comp. ex.) | Modified straw (inv. ex.) | Improvement |
| 10 | 188.7 ± 4.1 | 171.6 ± 4.8 | 9% |
| 20 | 308.0 ± 1.6 | 267.3 ± 6.7 | 13% |
| 30 | 389.0 ± 8.6 | 331.4 ± 15.0 | 15% |
| 40 | 447.6 ± 17.3 | 393.1 ± 17.8 | 12% |
| 48 | 477.1 ± 6.3 | 433.1 ± 25.6 | 9% |

In Table 8 below is the amount of carbon dioxide produced during the aerobic decomposition of wood fibers is presented.

**Table 8. Evaluation of aerobic decomposition of wood fibers.**

| AEROBIC DECOMPOSITION WOOD FIBERS | | | |
|---|---|---|---|
| | Average mg CO2/g VS sample | | |
| Incubation time (d) | Unmodified wood (comp. ex.) | Modified wood (inv. ex.) | Improvement |
| 11 | 65.6 ± 4.7 | 66.4 ± 19.8 | -1% |
| 21 | 231.3 ± 10.3 | 211.1 ± 21.4 | 9% |
| 31 | 389.8 ± 15.9 | 352.6 ± 22.9 | 10% |
| 39 | 489.2 ± 16.3 | 448.2 ± 28.5 | 8% |
| 53 | 646.2 ± 16.7 | 597.9 ± 28.5 | 7% |

For both the wood fibers and the straw there was a significant improvement in both aerobic and anaerobic conditions in terms of reduced degradation.

### Evaluation of CO2 production from wood fibers

### Preparation of test specimens

The wood sample was wood fibers from wood residues - a mix of chips, bark and shavings from fir and pine having a lignin content of about 20-30%. The wood fibers were refined to < 4 mm granula and sterilized at 120 °C for 60 minutes. The refined wood fibers having a dry content of 40% were impregnated by spraying with an aqueous solution of cationic polyelectrolyte (Xelorex 1300, Solenis) with a concentration of 10% to provide an addition of 1.2% by dry weight of cationic polyelectrolyte with respect to the dry weight of the raw material followed by mixing and drying. As reference, wood fibers without any cationic polyelectrolyte addition was used.

### Evaluation of CO2 production

1 gram of test specimen was mixed with 0.5 g compost and 2.5 g water. The content was mixed in a small bottle and put into a container together with a CO2 meter. The lid was closed. CO2 level was measure on a regular basis. When CO2 level increased to or above 5000 pm the lid was opened for 2 minutes. A duplicate of each sample was tested.

The following fractions were analyzed:
a) Control with compost only (dry weight 40%),
b) Unmodified wood fibers with compost, and
c) Modified wood fibers with compost.

The CO2 level from a) compost was deducted from b) and c) to provide the results.

The carbon dioxide production during aerobic degradation was measured during an incubation time of in total 21 days. The amount of carbon dioxide produced from the impregnated, inventive, fibers is significantly lower than for the reference fibers. Accordingly, the carbon sequestration of the impregnated fibers is significantly higher than for the reference fibers. The results are presented in detail in Table 9 below.

**Table 9. Evaluation of CO2 production from wood fibers.**

| **CO2 test** | | |
|---|---|---|
| **Incubation time** (days) | **Wood fiber unmodified** (mg CO2/g dry weight) | **Wood fiber modified** (mg CO2/g dry weight) |
| 1 | 0.9 ± 0.0 | 0.5 ± 0.0 |
| 3 | 1.9 ± 0.0 | 0.7 ± 0.1 |
| 7 | 29.9 ± 1.0 | 8.9 ± 0.1 |
| 11 | 72.0 ± 2.8 | 17.5 ± 1.4 |
| 15 | 145.6 ± 5.8 | 52.9 ± 3.4 |
| 17 | 181.9 ± 6.1 | 77.7 ± 5.7 |
| 21 | 246.1 ± 10.1 | 123.9 ± 9.8 |

## Claims

1. Method for producing a cellulosic composition for use as a soil supplement, as a filter media or insulation comprising the steps:
a) providing a cellulosic material with a dry content of ≥ 10 wt% by dry weight;
b) adding a cationic polyelectrolyte in a content of 0.01-3 wt% by dry weight of cellulosic material to the cellulosic material having a dry content of ≥ 10 wt% by dry weight;
c) mixing the cellulosic material and the cationic polyelectrolyte; and
d) drying the cellulosic material and the cationic polyelectrolyte.

2. The method of claim 1, wherein the cationic polyelectrolyte in step b) is added with an aqueous solvent.

3. The method of claim 2, wherein the concentration of the cationic polyelectrolyte in the aqueous solvent is 0.05-20 wt% by dry weight, such as 0.1-15 wt% by dry weight, such as 0.5-15 wt%.

4. The method of claim 2 or 3, wherein the cationic polyelectrolyte has an electrical conductivity in the aqueous solvent according to ISO 7888:1985 of at least 100 µS/cm, such as at least 300 µS/cm.

5. The method of any one of the preceding claims, wherein the cationic polyelectrolyte is added by spraying.

6. The method of any one of the preceding claims, wherein the cationic polyelectrolyte is added to the cellulosic material in a content of 0.05-3 wt% by dry weight of cellulosic material, such as 0.1-3 wt% by dry weight of cellulosic material.

7. The method of any one of the preceding claims, wherein the cellulosic material is wood material, such as wood and/or leaf brushwood, wood chips, wood shavings, sawdust, cutter chips and/or bark; plant fibers, such as straw, hemp, jute, flax, bagasse, bamboo and/or cotton; pulp fibers, such as wood pulp and/or regenerated cellulose fibers; fiber sludge, biosludge, peat, organic waste, composted organic material, agricultural residues or mixtures thereof, preferably mechanical wood pulp, wood material, plant fibers, fiber sludge, biosludge, peat, organic waste, composted organic material, agricultural residues or mixtures thereof, even more preferably, wood material, plant fibers, fiber sludge, biosludge, peat, organic waste, composted organic material, agricultural residues or mixtures thereof.

8. The method of any one of the preceding claims, wherein the cationic polyelectrolyte is a nitrogen-containing polyelectrolyte, preferably polyethylenimine (PEI), polyvinylamine (PVAm), cationic polyacrylamide (CPAM), cationic starch or mixtures thereof.

9. The method of any one of the preceding claims, wherein the composition comprises at least 95% cellulosic material by dry weight of the composition, such as at least 97% by dry weight of the composition.

10. The method of any one of the preceding claims, wherein the lignin content of the cellulosic material is at least 3% by dry weight, such as at least 5% by dry weight according to ASTM E1758-01.

11. The method of any one of the preceding claims, wherein the cellulosic material provided in step a) has a dry content of ≥ 15wt% by dry weight, such as ≥ 20 wt% by dry weight.

12. A cellulosic composition with a dry content of ≥ 10 wt% by dry weight for use as a soil supplement in agriculture as a filter media or insulation comprising a cellulosic material and 0.01-3 wt% cationic polyelectrolyte by dry weight of the cellulosic material.

13. The composition of claim 12, wherein the cellulosic composition has a density of ≤ 600 kg/m³, such as ≤ 550 kg/m³.

14. Use of the composition according to any one of the claims 12-13 as a soil supplement, as insulation, as filter media, as wipes or as absorbent mats.

15. A mulch comprising the composition according to any one of the claims 12-13.
